**Europäisches Patentamt**

**European Patent Office**

**Office européen des brevets**

(19)

(11) Veröffentlichungsnummer : **0 045 471**
**B1**

(12) **EUROPÄISCHE PATENTSCHRIFT**

(45) Veröffentlichungstag der Patentschrift :
**05.10.83**

(21) Anmeldenummer : **81105935.1**

(22) Anmeldetag : **28.07.81**

(51) Int. Cl.³ : **C 01 G 19/04, C 01 B 33/10,
C 01 B 35/06**

(54) **Verfahren zur Herstellung von Lösungen komplexer Fluoride des Zinn(II).**

(30) Priorität : **05.08.80 DE 3029580**

(43) Veröffentlichungstag der Anmeldung :
**10.02.82 Patentblatt 82/06**

(45) Bekanntmachung des Hinweises auf die Patenterteilung : **05.10.83 Patentblatt 83/40**

(84) Benannte Vertragsstaaten :
**AT BE CH DE FR GB IT LI LU NL SE**

(56) Entgegenhaltungen :
**DE C 2 356 424**
**FR A 606 541**
**US A 3 172 724**
**US A 3 432 256**

(73) Patentinhaber : **Kali-Chemie Aktiengesellschaft
Postfach 220 Hans-Böckler-Allee 20
D-3000 Hannover 1 (DE)**

(72) Erfinder : **Willenberg, Heinrich Dr.rer.nat. Dipl.-Chem.
Theodor-Storm-Strasse 2
D-3008 Garbsen 4 (DE)**
Erfinder : **Becher, Wilfried Dr.rer.nat. Dipl.-Chem.
Sachsenäckerstrasse 16
D-7100 Heilbronn-Neckargartach (DE)**
Erfinder : **Hellberg, Karl-Heinz Dr.rer.nat. Dipl.-Chem
Willführstrasse 4
D-3000 Hannover 91 (DE)**

**0 045 471**

Verfahren zur Herstellung von Lösungen komplexer Fluoride des Zinn(II)

Die Erfindung betrifft ein Verfahren zur Herstellung von Lösungen komplexer Fluoride des Zinn(II). Lösungen komplexer fluoride des Zinn(II) finden z. B. Anwendung in der Galvanotechnik und weisen gegenüber anderen Badtypen Vorteile auf, wie z. B. Abscheidung hochwertiger Metallüberzüge bei hoher Stromdichte, hohe Abscheidungsgeschwindigkeit, Anfall von weniger Anodenschlamm etc.

Es sind bereits Verfahren zur Herstellung von Lösungen komplexer Fluoride des Zinn(II) bekannt. Gemäß DE-C-23 56 424 wird zur Herstellung von Zinn(II)-fluoroborat-Lösung Fluoroborsäure und sauerstoffhaltiges Gas im Gleichstrom durch eine getauchte Packung von Zinnteilchen geleitet. Wegen der Kompakten Flüssigkeitsbefüllung ist jedoch die Kontaktierung des Luftsauerstoffs mit der Zinn-Oberfläche eingeschränkt, so daß die Raum-Zeit-Ausbeute, bezogen auf die Zinnschüttung, ca. 34 g 50 %ige $Sn(BF_4)_2$-Lösung pro 1 und h beträgt, bezogen aber auf das gesamte Reaktorvolumen nur 2 g 50 %ige $Sn(BF_4)_2$-Lösung pro 1 und h beträgt.

Außerdem muß der Reaktor fremdbeheizt werden wegen des langsamen Fortgangs der Reaktion und der somit nur in geringer Leistung abgegebenen exothermen SnO-Bildungs- bzw.-Neutralisationswärme.

Gemäß US-A-3 432 256 werden zur Herstellung von Zinn(II)-Fluoroborat-Lösungen Fluoroborsäure und ein sauerstoffhaltiges Gas im Gegenstrom über eine Packung « moosartigen » Zinns mit einer spezifischen Oberfläche von mindestens 0,1 cm²/g geleitet. Dabei wird die fluoroborsäure von oben auf die Zinnpackung aufgesprüht, während das Gas in die Zinnpackung eingeleitet wird, vorzugsweise oberhalb der Oberfläche der, in der unteren Hälfte der Zinnschüttung stehenden Säurelösung. Diese Verfahrensvariante führt zu Zinn(II)-Fluoroborat-Lösungen, die noch 2 bis 10 Gew.-% an vierwertigem Zinn enthalten. Da solche Lösungen für viele Anwendungszwecke ungeeignet sind, ist im Verfahren der US-PS eine Nachbehandlung der Lösung mit metallischem Zinn in Abwesenheit von Sauerstoff, vorzugsweise sogar mit einem reduzierend wirkenden Gas notwendig, um, z. B. durch 10 bis 48 stündige Nachbehandlung bei 80 °C, den Zinn(IV)-Gehalt auf 1 Gew.-% oder darunter abzusenken. Diese Nachbehandlung setzt aber die Wirtschaftlichkeit des Verfahrens erheblich herab, denn entweder sind zwei mit Zinn gefüllte Reaktoren notwendig, oder, bei Verwendung nur eines Reaktors, muß dieser nacheinander als Oxidations- und dann als Reduktionsreaktor benutzt werden.

Gemäß FR-A 606 541 ist ein Verfahren zur Herstellung von Zinn(II)-fluorosilikat-Lösungen bekannt, bei dem elementares Zinn mit Fluorokieselsäure in Gegenwart von Salpetersäure und gegebenenfalls weiteren Zusätzen umgesetzt wird. Genauere Angaben über die Temperatur, die gewonnenen Mengen, den Sn(IV)-Gehalt des Produktes sowie alternative Oxidationsmittel fehlen. Eine Überprüfung nach den dortigen Angaben ergab nur sehr kleine Sn(II)-Werte neben hohen Sn(IV)-Gehalten und eine insgesamt sehr geringe Reaktivität.

Aufgabe der Erfindung ist, ein Verfahren zur Herstellung von Lösungen komplexer Fluoride des Zinn(II) zur Verfügung zu stellen, das die Nachteile des Standes der Technik überwindet.

Diese Aufgabe wird gelöst, indem man gattungsgemäß eine Fluorokomplex-Anion enthaltende Säure und sauerstoffenthaltendes Gas gleichzeitig und im Gegenstrom über ein Bett aus metallischem Zinn leitet, wobei man erfindungsgemäß die Säure mindestens zwischen der oberen Begrenzung des Zinn-Bettes und der Einleitstelle des Sauerstoffenthaltenden Gases einleitet.

Unter oberer Begrenzung des Zinn-Bettes ist dabei im allgemeinsten Fall dasjenige Ende des Zinnbettes zu verstehen, das, in Strömungsrichtung des Gases betrachtet, der Gaseinleitstelle gegenüberliegt. Für den einfachsten, realisierbaren Fall wird das Gas von unten nach oben durch das Zinn-Bett strömen, so daß die Säureeinleitstelle auch räumlich gesehen an der oberen Begrenzung erfolgt.

Die Säureeinleitung erfolgt zwischen dieser oberen Begrenzung und der Gaseinleitstelle, also in das Zinn-Bett hinein. Der oberhalb der Säureeinleitstelle gelegene Teil des Zinn-Bettes wirkt dabei gleichzeitig als Dephlegmator und Kühler für das Abgas und als Zinnvorrat.

Eine weitere vorzugsweise Ausgestaltung sieht mindestens eine Gaseinleitstelle an der unteren Begrenzung des Zinn-Bettes vor, wobei gegebenenfalls auch noch weitere Gaseinleitstellen in das Zinn-Bett hinein vorgesehen sein können. Zwischen oberster Gaseinleitstelle und Säureeinleitstelle sollte vorteilhafterweise ein solcher Abstand liegen, der noch einen befriedigenden Umsatz zwischen Säure, Zinn und frisch eingeleitetem Sauerstoff ermöglicht.

Das Verfahren kann als reines Durchflußverfahren betrieben werden, d. h. an der Säureeinleitstelle wird nur frische Säure aufgegeben und der am unteren Ende des Zinn-Bettes ankommende Produktstrom wird vollständig abgenommen.

Andererseits kann das Verfahren satzweise betrieben werden, z. B. in der Art, daß eine vorgelegte Säuremenge ständig so lange im Kreislauf über das Zinn-Bett geführt wird, bis der gewünschte Umsatzgrad erreicht ist.

Einen Übergang zwischen diesen beiden Verfahrensvarianten stellt ein Verfahren dar, bei dem ein Teilstrom des am unteren Ende des Zinn-Bettes ankommenden Produktstromes zurückgeführt wird. Obwohl mit dem Durchflußverfahren gute Ergebnisse erreicht werden, ist das bevorzugte Verfahren dasjenige, bei dem mindestens eine Teilmenge des Produktstromes zurückgeführt wird.

In einer besonders bevorzugten Verfahrensvariante ist die Zone zwischen Gas- und Säureeinleitung mindestens zu 50 % als Rieselzone ausgebildet, wodurch ein optimaler Kontakt zwischen Gas, Flüssigkeit

2

und Feststoff erreicht wird.

Als sauerstoffenthaltendes Gas kommen in erster Linie Luft und Sauerstoff in Frage.

Das Verfahren eignet sich besonders zur Herstellung von Zinn(II)-Fluoroborat-Lösungen und Zinn(II)-Fluorosilikat-Lösungen. Als Säuren werden in diesem Falle Fluoroborsäure bzw. Fluorokieselsäure eingesetzt.

Dabei arbeitet man im Falle der Fluoroborsäure bei Temperaturen zwischen Raumtemperatur und 90 °C, vorzugsweise bis 80 °C, im Falle der Fluorokieselsäure zwischen Raumtemperatur und 70 °C, vorzugsweise bis 60 °C, gemessen jeweils im Zinn-Bett. Die Umsatzgeschwindigkeit im erfindungsgemäßen Verfahren ist dabei so groß, daß die Reaktion autotherm abläuft, bzw. sogar durch Kühleinrichtungen ein Überschreiten der oberen Temperatur wegen der damit verbundenen Gefahr der thermischen Zersetzung der Säure verhindert werden muß.

Im Fall des Einsatzes von Fluorokieselsäure empfiehlt es sich, eine Fluorokieselsäure mit einem Gehalt an 0,1 bis 5 Gew.-%, vorzugsweise 0,5 bis 3 Gew.-% HF einzusetzen.

Angesichts des Standes der Technik war es überraschend, daß das erfindungsgemäße Verfahren in einem einzigen Schritt Lösungen liefert, die sich selbst bei Verwendung von Sauerstoff als Reaktionsgas durch sehr niedrige Zinn(IV)-Gehalte auszeichnen. Eine teilweise Erklärung für diesen überraschenden Effekt ist wohl darin zu sehen, daß z. B. die unerwünschte Reaktion

$$Sn(BF_4)_2 + 1/2\,O_2 + 2\,HBF_4 \longrightarrow Sn(BF_4)_4 + H_2O$$

dadurch verhindert wird, daß erfindungsgemäß der Reaktor vollständig, d. h. bis zur Säureeinleitstelle, vorzugsweise noch darüber hinaus mit metallischem Zinn gefüllt ist, welches diese Reaktion unterbindet. Damit ist andererseits die Verwendung hoher Strömungsgeschwindigkeiten möglich, wodurch sehr gute Raum-Zeit-Ausbeuten erreicht werden. Das erfindungsgemäße Verfahren arbeitet somit besonders wirtschaftlich.

## Beispiele

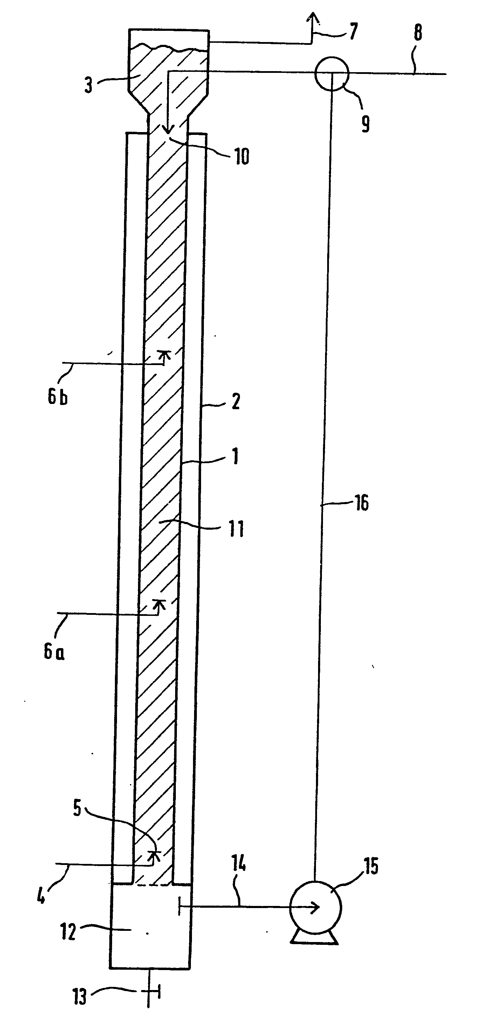

Als Versuchsapparatur diente der in Fig. 1 schematisch dargestellte Reaktor, ein zylindrisches Polypropylenrohr (1) — im folgenden « Säule » genannt — einer Gesamtlänge von 291 cm und einer lichten Weite von 10 cm. Die Säule ist von einem Kühlmantel (2) umgeben. Am oberen Säulenende befindet sich ein konisches Vorratsgefäß (3) aus Polypropylen aus dem das Zinn von selbst nach unten in die Säule nachgleitet, um verbrauchtes Zinn zu ersetzen. Am unteren Ende der Säule wird durch die Leitung (4) über eine Fritte (5) aus Polypropylen Gas eingeleitet. Weitere Gaseinleitung ist über die Leitungen (6a) une (6b) möglich. Das Abgas verläßt den Reaktor über Leitung (7). Die Säure wird durch Leitung (8) über einen Dreiwegehahn (9) der Säureeinleitstelle (10) zugeführt, die innerhalb der Zinnschüttung (11) liegt, welche von der Gaseinleitstelle (4) bis kurz unter den oberen Rand des Vorratsgefäßes (3) reicht. Säure und Reaktionsprodukt fließen aus dem Reaktor in das Vorratsgefäß (12) (Volumen : 51), dem sie über das Ventil (13) entnommen werden können. Eine weitere Entnahme über Leitung (14) ermöglicht eine Rückführung von Lösung über Pumpe (15) und Leitung (16) zum Dreiwegehahn (9). In den Versuchen lag der Stand des Flüssigkeitsspiegels im Bereich von 50 cm oberhalb bis zu 50 cm unterhalb der Gaseinleitstelle (4), ohne daß ein Einfluß auf die Versuchsergebnisse festgestellt wurde.

Die %-Angaben in den folgenden Beispielen sind Gew.-%, Gasvolumina werden in Normliter angegeben. Die Raum-Zeit-Ausbeute ist auf das Gesamtvolumen von 28 l bezogen.

## Beispiel 1

14 kg 50 %ige HBF$_4$ wurden über Leitung (8) auf die Säule gegeben und 3 1/2 Stunden lang bei einer Temperatur von ca. 70 °C mit einem Durchsatz von 18 l/h unter Zuleitung von 137 l/h Sauerstoffgas über Leitung (4) im Kreislauf über das Zinn-Bett (11) (feinteiliges Zinn mit > 6 cm$^2$/g) gepumpt. Der Flüssigkeitsspiegel befand sich oberhalb der Gaseinleitstelle (4). Als produkt, daß nach Beendigung der Reaktion über das Ventil (13) entnommen wurde, wurden 18,8 kg 58 %ige Sn(BF$_4$)$_2$-Lösung mit 2,3 % freier HBF$_4$ und $\leq$ 0,3 % Sn(IV) erhalten. Die Raum-Zeit-Ausbeute (RZA) betrug somit 223 g 50 %ige Lösung/l und h.

## Beispiel 2

Es wurde wie in Beispiel 1 verfahren, jedoch mit Einsatz von insgesamt 560 l/h Luft anstelle von Sauerstoff, die über Leitung (4) und (6a) in gleichen Volumenströmen dosiert wurden. Es resultierte eine 53 %ige Sn(BF$_4$)$_2$-Lösung mit $\leq$ 0,3 % Sn(IV), ohne freie HBF$_4$. Die RZA betrug 115 g 50 %ige Lösung/l und h. Der Flüssigkeitsspiegel lag unterhalb der Gaseinleitstelle (4).

## Vergleichsbeispiel

Es wurde wie in Beispiel 1 gearbeitet, wobei aber die Lage von Säureeinleitstelle (10) oberhalb des oberen Endes des Zinn-Bettes angeordnet war. Es resultierte eine 60 %ige Sn(BF$_4$)$_2$-Lösung mit über 1,3 % Sn(IV).

## Beispiel 3

50 %ige HBF$_4$ wird mit einer Aufgabegeschwindigkeit von 2 l/h und einer Sauerstoff-Begasung von 70 l/h — durch Einleitstelle (4) — bei 70 °C durch das Zinn-Bett (11) geleitet. Nach Einstellung stationärer Verhältnisse fließt über Ventil (13) eine 43,6 %ige Sn(BF$_4$)$_2$-Lösung ab, die 13,9 % freie HBF$_4$, 1,5 % H$_3$BO$_3$ und 0,7 % Sn(IV) enthält. RZA = 174 g 50 %ige Lösung/l und h.

## Beispiel 4

12,75 kg 29,5 %ige H$_2$SiF$_6$ mit 2,2 % HF werden über Leitung (8) auf die Säule gegeben und 5 Stunden lang bei einer Temperatur von 45 °C mit einem Durchsatz von 20 l/h unter Zuleitung von 66 l/h Sauerstoffgas über Leitung (4) im Kreislauf über das Zinn-Bett (11) (feinteiliges Zinn > 6 cm$^2$/g) gepumpt. Der Flüssigkeitsspiegel befard sich oberhalb der Gaseinleitstelle (4). Als Produkt, das nach Beendigung der Reaktion über das Ventil (13) entnommen wurde, wurden 16,3 kg 41 %ige SnSiF$_6$-Lösung mit 0,6 % Sn(IV) erhalten. Die Raum-Zeit-Ausbeute (RZA) betrug somit 119 g 40 %ige Lösung pro l und h.

## Beispiel 5

Es wurde wie in Beispiel 4 verfahren, jedoch mit Einsatz von insgesamt 330 l/h Luft anstelle von Sauerstoff, die über Leitung (4) und (6a) in gleichen Volumenströmen dosiert wurden. Der Flüssigkeitsspiegel lag unterhalb der Gaseinleitstelle (4). Es resultierte eine 44,7 %ige SnSiF$_6$-Lösung mit 0,3 % Sn(IV). Die RZA betrug 86 g 40 %ige Lösung/l und h.

## Beispiel 6

31 %ige H$_2$SiF$_6$ mit 1,3 % HF wird mit einer Aufgabegeschwindigkeit von 2 l/h und einer Sauerstoffbegasung von 70 l/h — durch Einleitstelle (4) — bei 60 °C durch das Zinn-Bett (11) geleitet. Nach Einstellung stationärer Verhältnisse fließt über Ventil (13) eine 37,6 %ige SnSiF$_6$-Lösung ab, die 0,9 % freie H$_2$SiF$_6$ und 0,9 % Sn(IV) enthält. RZA = 96 g 40 %ige Lösung pro l und h.

## Ansprüche

1. Verfahren zur Herstellung von Lösungen komplexer Fluoride des Zinn(II) durch gleichzeitiges Überleiten von ein Fluorkomplex-Anion enthaltende Säure und sauerstoffenthaltendem Gas über ein Bett aus metallischem Zinn, wobei Säure und Gas im Gegenstrom geführt werden, dadurch gekennzeichnet, daß man die Säure zwischen der oberen Begrenzung des Zinn-Bettes und der Einleitstelle des sauerstoffenthaltenden Gases einleitet.

2. Verfahren nach Anspruch 1, dadurch gekennzeichnet, daß man das Gas wenigstens durch eine Einleitstelle an der unteren Begrenzung des Zinn-Bettes zuführt.

3. Verfahren nach einem der Ansprüche 1 bis 2, dadurch gekennzeichnet, daß man zumindest einen Teilstrom des Produktstromes zur Säureeinleitstelle zurückführt.

4. Verfahren nach einem der Ansprüche 1 bis 3, dadurch gekennzeichnet, daß man die Zone zwischen Säure- und Gaseinleitung mindestens zu 50 % als Rieselzone ausbildet.

5. Verfahren nach einen der Ansprüche 1 bis 4, dadurch gekennzeichnet, daß man als Gas Luft oder Sauerstoff verwendet.

6. Verfahren nach einem der Ansprüche 1 bis 5, dadurch gekennzeichnet, daß man als Säure HBF$_4$ verwendet.

7. Verfahren nach einem der Ansprüche 1 bis 6, dadurch gekennzeichnet, daß man als Säure H$_2$SiF$_6$ verwendet.

8. Verfahren nach Anspruch 7, dadurch gekennzeichnet, daß man eine Säure mit einem Gehalt von 0,1 bis 5 Gew.-% HF, vorzugsweise 0,5 bis 3 Gew.-% HF verwendet.

9. Verfahren nach einem der Ansprüche 1 bis 6, dadurch gekennzeichnet, daß man im Zinn-Bett eine Temperatur von Raumtemperatur bis 90 °C, vorzugsweise bis 80 °C einstellt.

10. Verfahren nach einem der Ansprüche 1 bis 5 und/oder Anspruch 7, dadurch gekennzeichnet, daß man im Zinn-Bett eine Temperatur von Raumtemperatur bis 70 °C, vorzugsweise bis 60 °C einstellt.

## Claims

1. Process for producing solutions of complex fluorides of tin(II) by simultaneously leading an acid containing a complex fluoroanion and a gas containing oxygen over a bed of metallic tin, in which acid

4

and gas are conducted in countercurrent, characterized in that the acid is introduced between the upper limit of the tin bed and the point of introduction of the gas containing oxygen.

2. Process according to Claim 1, characterized in that the gas is admitted at least through one introduction point at the lower limit of the tin bed.

3. Process according to one of Claims 1 to 2, characterized in that at least a partial stream of the product stream is returned to the acid introduction point.

4. Process according to one of Claims 1 to 3, characterized in that the zone between the acid inlet and the gas inlet is constructed at least to 50 % as a trickling zone.

5. Process according to one of Claims 1 to 4, characterized in that air or oxygen is used as the gas.

6. Process according to one of Claims 1 to 5, characterized in that $HBF_4$ is used as the acid.

7. Process according to one of Claims 1 to 6, characterized in that $H_2SiF_6$ is used as the acid. ·

8. Process according to Claim 7, characterized in that an acid with a content of 0.1 to 5 % by weight HF, preferably 0.5 to 3 % by weight HF, is used.

9. Process according to one of Claims 1 to 6, characterized in that in the tin bed a temperature of from ambient temperature to 90 °C, preferably to 80 °C, is set.

10. Process according to one of Claims 1 to 5 and/or Claim 7, characterized in that in the tin bed a temperature of from ambient temperature to 70 °C, preferably to 60 °C, is set.

## Revendications

1. Procédé pour la production de solutions de fluorures complexes d'étain(II) par introduction simultanée d'un acide contenant un anion de complexe fluoré et d'un gaz contenant de l'oxygène sur un lit d'étain métallique, l'acide et le gaz étant introduits à contre-courant, caractérisé en ce qu'on introduit l'acide entre la limite supérieure du lit d'étain et le site d'admission du gaz contenant de l'oxygène.

2. Procédé selon la revendication 1, caractérisé en ce qu'on introduit le gaz par au moins un site d'admission se situant à la limite inférieure du lit d'étain.

3. Procédé selon l'une des revendications 1 et 2, caractérisé en ce qu'on recycle au moins une partie du courant de production au site d'introduction de l'acide.

4. Procédé selon l'une des revendications 1 à 3, caractérisé en ce qu'on constitue la zone comprise entre les admissions d'acide et de gaz, pour au moins à 50 %, sous forme d'une zone de ruissellement.

5. Procédé selon l'une des revendications 1 à 4, caractérisé en ce que, comme gaz, on utilise de l'air ou de l'oxygène.

6. Procédé selon l'une des revendications 1 à 5, caractérisé en ce qu'on utilise $HBF_4$ en tant qu'acide.

7. Procédé selon l'une des revendications 1 à 6, caractérisé en ce qu'on utilise $H_2SiF_6$ en tant qu'acide.

8. Procédé selon la revendication 7, caractérisé en ce qu'on utilise un acide avec une teneur de 0,1 à 5 % en poids de HF, de préférence de 0,5 à 3 % en poids de HF.

9. Procédé selon l'une des revendications 1 à 6, caractérisé en ce qu'on établit dans le lit d'étain, une température comprise entre la température ambiante et 90 °C, de préférence jusqu'à 80 °C.

10. Procédé selon l'une des revendications 1 à 5, et/ou la revendication 7, caractérisé en ce qu'on établit dans le lit d'étain une température comprise entre la température ambiante et 70 °C de préférence jusqu'à 60 °C.